# EUROPEAN PATENT SPECIFICATION

(11) **EP 1 157 310 B1**
(45) Date of publication and mention of the grant of the patent: **01.03.2006**
(21) Application number: 99962127.9
(22) Date of filing: 23.12.1999
(51) Int. Cl.: G03H 1/02, B44F 7/00, G03F 7/04

(54) **A METHOD FOR REPLICATING A SURFACE RELIEF AND AN ARTICLE FOR HOLDING A SURFACE RELIEF**
REPLIKATIONSVERFAHREN FÜR EIN OBERFLÄCHEN-RELIEF UND EIN PRODUKT MIT EINEM RELIEFDRUCK
PROCEDE DE REPRODUCTION D'UN RELIEF DE SURFACE ET ARTICLE COMPORTANT CE RELIEF DE SURFACE

(30) Priority: 30.12.1998 DK 174598
(43) Date of publication of application: 28.11.2001
(73) Proprietor: Glud & Marstrand A/S, 8723 Losning (DK)
(72) Inventor: LINDVOLD, Lars, DK-2980 Kokkedal (DK); STENSBORG, Jan, DK-1620 Copenhagen V (DK)
(74) Representative: Plougmann & Vingtoft A/S
(86) International application number: PCT/DK1999/000734
(87) International publication number: WO 2000/040421

(56) References cited:
- EP-A- 0 297 764
- EP-A1- 0 320 638
- EP-A1- 0 939 037
- EP-A2- 0 399 363
- EP-A2- 0 458 631
- EP-A2- 0 540 335
- US-A- 4 856 857
- US-A- 4 900 111
- US-A- 4 913 858
- US-A- 5 085 514
- US-A- 5 200 253
- US-A- 5 281 499
- US-A- 5 503 902
- US-A- 5 810 957
- US-A- 5 922 455
- PATENT ABSTRACTS OF JAPAN vol. 0185, no. 576 (M-1697) 04 November 1994 & JP 06 210 943 A (TAKEUCHI PRESS IND CO LTD) 02 August 1994 -& JP 06 210943 A (TAKEUCHI PRESS IND CO LTD) 2 August 1994 (1994-08-02)

## Description

The present invention relates to a method for replicating a surface relief in a non-metallic layer. In particular, the present invention relates to a method for replicating a surface relief in a non-metallic layer being held by a metal substrate. Furthermore, the present invention relates to an article for holding a surface relief, said article being manufactured according to the above-mentioned method.

The use of holograms as means to protect printed materials and other products against counterfeiting has gained wide acceptance in industry today. Holograms are also used as decoration on printed materials, in particular packaging. Holograms are either applied as labels or by hot embossing of holographic foils.

Generally, inducing holograms directly into metals is very costly whereby the cost of each item becomes high. Furthermore, there are limitations in choice of metals, and the durability of these metals is low.

US 4,725,111 and US 4,773,718 both pertain to processes of embossing holograms directly into a metal surface, preferably aluminium. Embossing of holograms directly into a metal requires that high pressure is applied to the embossing tool due to the hardness of the metal. In US 4,725,111 and US 4,773,718 this problem has been solved by running the embossing process at elevated temperatures - i.e. the temperature of the metal is heated above room-temperature during embossing of holograms.

It is a disadvantage of the processes described in US 4,725,111 and US 4,773,718, that in order to soften the aluminium the embossing process must take place at elevated temperatures so as to reduce the hardness of the aluminium.

US 4,900,111 describes a technique for embossing holograms into a hard metal surface. The hard metal surface is coated with a soft metal layer, preferably tin, whereby embossing may take place at room-temperature.

European patent application EP 0 297 764 discloses the features of the preamble of claims 1 and 9 and describes a method of producing a holographic image on a metallic surface of an article comprising coating the article with a transparent thermoplastic substance and then impressing the holographic image in the surface of the transparent substance. The holographic image may be impressed into the opaque substance.

Published Japanese patent application No. 06210943 describes printing methods of metal products in which a primary printing such as characters, patterns or the like is applied onto the surface of a metal product using normal printing means, a top coating of thermosetting resin is applied on top thereof and heated so that the resin is completely cured. Then thermosetting resin is printed only on to the desired part of the aforementioned primary printing and a hologram foil is attached to the surface of the thermosetting resin printing.

US 5,281,499 describes a product and a process comprising a layered hologram and diffraction grating which will resist deterioration from abrasion and moisture as a separate article of commerce when attached to a substrate, especially fabrics. One embodiment describes an interfaced assembly comprising a substrate, a film having a holographic or a diffraction grating image thereon and an adhesive silk screen printing ink underlying the film wherein a printed design on the substrate cooperates with the image on the film to provide a total graphic.

US 4,856,857 discloses Fig.13 a transparent reflection-type hologram adhered to a substrate having printed information and comprising a transparent hologram-forming layer including a relief-hologram forming surface and a holographic effect-enhancing layer comprising a thin transparent film.

US 5,193,014 describes a method of using a simple diffraction grating in the bottom of a tin can as a pressure gauge. Using the described method the filling of the can - e.g. with beverages - may be controlled by monitoring light diffracted from the diffraction grating.

It is a disadvantage of all the above-mentioned techniques, that a relative high pressure is required in order to press the embossing tool into the material in question.

It is a further disadvantage of all the above-mentioned techniques that due to the high pressure required - and therefore also the time required to manufacture e.g. a hologram - none of the above-mentioned techniques can be combined with high speed manufacturing of e.g. food containers.

It is a still further disadvantage of all the above-mentioned techniques that the article in which a hologram is to be induced may not be prepared with a colour print prior to embossing the hologram.

It is a still further disadvantage of all the above-mentioned techniques that no visual effects provided by colour prints may be combined with holograms.

It is an object of the present invention to provide a technique for replicating a surface relief into a broad range of non-metallic materials.

It is a further object of the present invention to provide a technique for replicating a surface relief without applying a high pressure to the embossing tool.

It is a still further object of the present invention to provide a technique for replicating a surface relief at high speeds and at room-temperature. In particular, the technique should be applicable for high-speed production lines for manufacturing e.g. food containers.

The above-mentioned objects are complied with by providing, in a first aspect, a method for replicating a surface relief according to claim 1.

The first layer of non-metallic material may preferably be selected from the group consisting of lacquers, polymers, printing inks or any combination thereof. The first layer may in principle be held by any kind of substrate. Preferably, the first layer is held by a metal substrate.

The substrate may be substantially plane. Alternatively, the substrate may be curved. In order to replicate a surface relief having surface variations on a sub-micron scale the surface of the substrate has to fulfil certain requirements. The surface of the substrate should be as smooth as possible.

The colour print held by the metal substrate decorates the surface and enhances visual effects generated by the surface relief upon incident of external illumination.

In order to protect the replicated surface relief the method may further comprise the step of providing a second layer, said second layer being substantially transparent and covering at least part of the first layer of non-metallic material. This second layer may be selected from the group consisting of lacquers, polymers, laminated plastic, printing inks or any combination thereof. The second layer may be provided so as to follow the surface variations of the replicated surface relief. Alternatively, the second layer may be provided so as to encapsulate the replicated surface relief. In this situation the second layer does not necessarily follow the surface variations of the surface relief.

In order obtain visual effects the refractive indices of the first and second layers must be different The at least one surface relief replicated in the first layer of non-metallic material comprises a diffracting optical element, such as a hologram, grating or the like.

Preferably, the thickness of the first layer of non-metallic material is within the range 1-50 µm, such as within the range 2-25 µm, such as within the range 2-20 µm, such as within the range 5-15 µm, such as within the range 5-10 µm.

Replication of the at least one surface relief may be performed as a part of a rolling process or a stamping process or any combination thereof.

Preferably, the providing of the first layer of non-metallic material and the changing of the surface properties of said first layer is performed during essentially the same manufacturing process. By essentially is meant within a time period of a few minutes. The replicated surface relief is essentially permanent over time. By essentially permanent is meant that the replicated surface relief is stable over a period of at least 12 months.

The surface of the object being pressed into the first layer of non-metallic material is preferably fabricated from a refractory material. Alternatively the surface may be hardened so as to reduce wear of the surface of the object.

In a second aspect, the present invention relates to an article holding a surface relief according to claim 9.

Also in the aspect, the at least one surface relief being held by the first tayer of non-metallic material comprises a diffracting optical element, such as a hologram, grating or the like.

The first layer of non-metallic material may be selected from the group consisting of lacquers, polymers, printing inks or any combination thereof.

In order to protect the surface relief the article may further comprise a second layer, said second layer being substantially transparent and covering at least part of the first layer of non-metallic material. The second layer, which has a reflective index different from the first layer of non-metal material, may be selected from the group consisting of lacquers, polymers, laminated plastic, printing inks or any combination thereof.

The metal substrate holds a colour print so as to enhance visual effects. The article forms an integrated part of a container, such as a food container. In the present context food containers also means confectionery containers, tobacco containers, milk powder containers, containers for heat-treated food, cake cans or biscuit cans. Alternatively, the container may be a container for beverages. Finally a container may also be a general-purpose bucket, such as a bucket for holding paint.

The above-mentioned types of containers are known as either food containers or non-food containers.

The present invention will now be described in further details with reference to the accompanying figures.
Figure 1 illustrates a replicated surface relief 3 in a non-metallic layer 2. The non-metallic layer 2 is being held by a metal substrate 1.
Figure 2 shows the article shown in figure 1 where the surface relief 3 is covered by a protective layer 4.
Figure 3 shows the article shown in figure 1 where the surface relief 3 is covered by a protective layer 5.
Figure 6 is similar to figure 2 except that the metal substrate holds a colour print 7.
Figure 7 is similar to figure 3 except that the metal substrate holds a colour print 7.
Figure 8 shows the principle of a rolling process.
Figure 9 shows the principle of a stamping process.

Replication of surface reliefs according to the present invention forms an integral part of a colour printing process in the manufacturing of metal containers for the food industry. In this way, cuts and savings in production time and resources are achieved. Last but certainly not least, holograms will appear as an integral part of the product, i.e., an integral part of a metal container. This gives a more uniform design of a metal substrate and protects the container against counterfeiting.

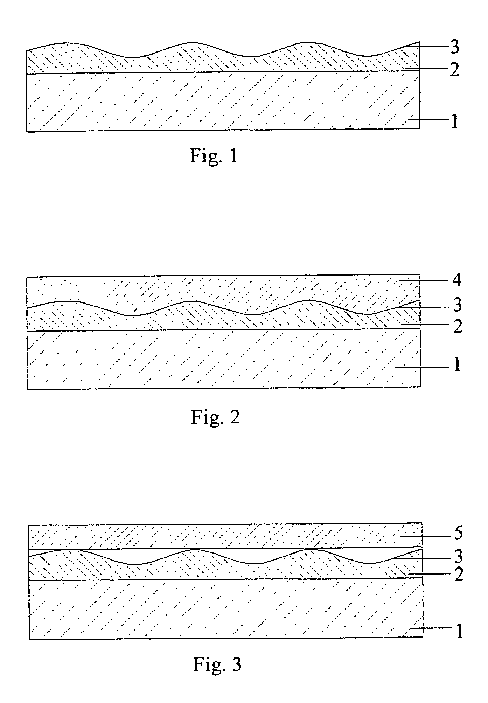

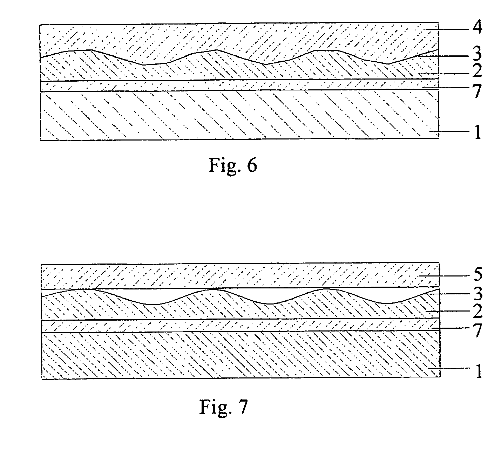

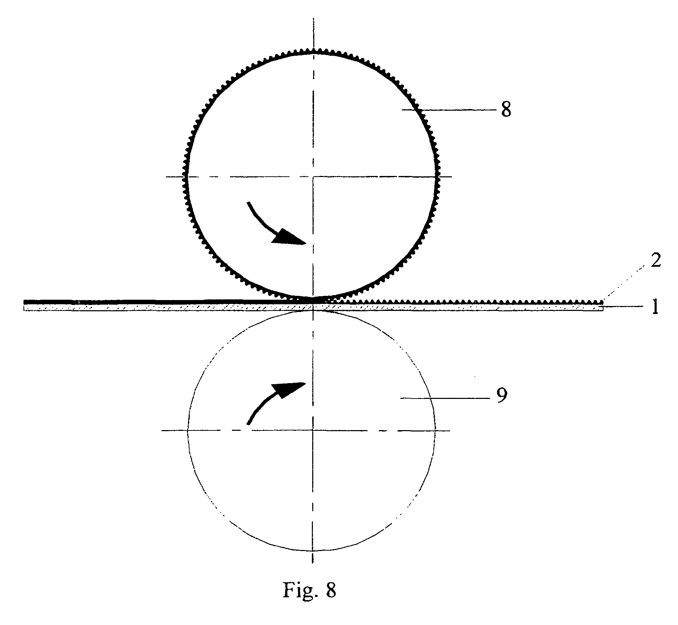

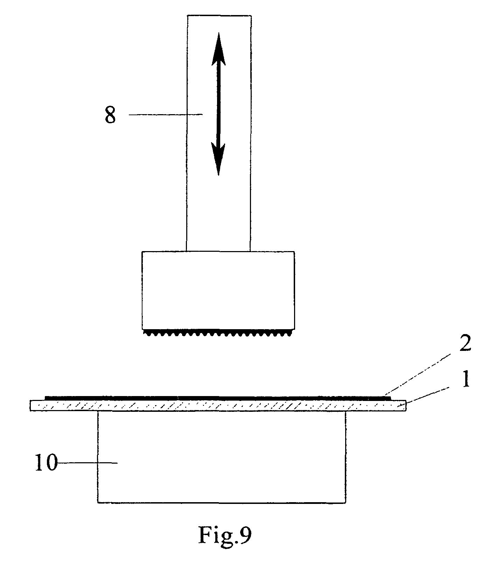

Referring now to figure 1, an article according to a preferred embodiment of the present invention is shown. The article comprises a metal substrate 1 which, in figure 1, is shown as a plane substrate. However, the substrate may as well be curved so as to form a sidewall of e.g. a cylindrical shaped food container. The surface of the substrate should be as smooth as possible. Preferably, the substrate is metal, such as aluminium or tinplate.

As seen in figure 1 the substrate holds a layer of non-metallic material 2. Preferably, the non-metallic layer is one of the following lacquers - DI 4004 or lacquer no. 1402-011 both supplied by the company Valspar Coates. Alternatively, the following lacquers may be used:
EG 41001 F, EG 41082 F and EQ 16003 F from PPG
77/6/5 Z from Vernicolor
11545 from Manders
ME 812 F, 11573MA from Valspar Coates

A surface relief 3 has been replicated in the non-metallic layer 2. The replicated surface relief 3 is seen as small spatial variations in the surface topology of the non-metallic layer 2. Preferably, the surface relief 3 is a diffracting optical element, such as a hologram, grating or the like. The thickness of the non-metallic layer is typically within the range 5-10 µm, which is sufficient to absorb the depth variations of the surface relief 3. These are typically in the 50-300 nm range.

In order to protect the replicated surface relief 3 a protective layer of transparent material 4 and 5 may optionally be provided on top of the replicated surface relief. These protective layers 4 and 5 are shown in figure 2 and 3. In figure 2 the lower surface of the protective layer 4 follows the surface variations of the surface relief 3. In figure 3 the protective layer 5 does not follow the surface variations of the surface relief 3 whereby air gaps are formed between the protective layer 5 and the surface of the surface relief 3.

In order to obtain visual effects from the surface relief 3 in figure 2 the refractive index of the non-metallic layer 2 must be different from the refractive index of the protective layer 4. The protective layers 4 and 5 are selected among the same group of lacquers as the non-metallic layer 2.

Referring now to figure 3, the requirements regarding the refractive indices are not as critical as in figure 2. This is due to the air gaps between the non-metallic layer and the protective layer. The reason for this being that the air gaps automatically result in a refractive index step at the surface of the surface relief 3.

The visual effects obtained from the articles shown in figure 2 and 3 are generated by the refractive index difference between the non-metallic layer and the adjacent medium (protective layer or air). The protective layer also protects the replicated surface relief against wear.

Visual effects are enhanced because the substrate, prior to providing the non-metallic layer, comprises a colour print - as illustrated in figures 6 and 7. The colour print 7 is a colour layer positioned between the metal substrate 1 and the non-metallic layer 2. The colour print 7 will typically contain a decoration, such as a logo, trademark etc. The best visual effects have been observed using dark colours, e.g. dark blue.

As previously mentioned replication of a surface relief may be performed as a part of a rolling or a stamping process. The general principle of a rolling process is illustrated in figure 8 where the carrier roll 9 is adapted to hold and move the substrate 1 and non-metallic layer 2. The replicating tool 8 is positioned above the carrier roll. The pressure applied to the replicating tool during embossing is dependent on the properties of the non-metallic layer. The applied pressure is within the range 100-1000 kg/cm². Preferably, the applied pressure is within the range 300-400 kg/cm². Compared to conventional systems where holograms are embossed directly into metal substrates the required pressure in the present invention has been significantly reduced.

In figure 9 a stamping process is illustrated. The substrate 1 holding the non-metallic layer 2 is positioned on a support structure 10. Again, the embossing tool 8 is pressed into the non-metallic layer 2 in order to replicate a surface relief.

For industrial purposes, where high-speed manufacturing is required, the rolling process is the most favourable. Furthermore, the rolling process may be easily adapted to conventional rolls.

## Claims

1. A method of replicating a surface relief (3), said method comprising the steps of
- providing a first layer of a non-metallic material (2) which is held by a holding metal substrate (1),
- pressing into the first layer of non-metallic material (2) an object (8) having a surface which comprises at least one surface relief (3) so as to change surface properties of the first layer of non-metallic material (2) in order to replicate the at least one surface relief (3), said at least one surface relief (3) forming part of the surface of the object (8) and comprising a diffracting optical element (3), and
**characterised in that**
- the metal substrate is arranged to form an integrated part of a container and **in that** a colour layer (7) is provided between the metal substrate (1) and the first layer of non-metallic material (2) for enhancing the visual effects.

2. A method according to claim 1, wherein the first layer of non-metallic material (2) is selected from the group consisting of lacquers, polymers, printing inks or any combination thereof.

3. A method according to claim 1 or 2, further comprising the step of providing a second layer (4,5), said second layer (4,5) being substantially transparent and covering at least part of the first layer of non-metallic material (2).

4. A method according to claim 3, wherein the second layer (4,5) is selected from the group consisting of lacquers, polymers, laminated plastic, printing inks or any combination thereof.

5. A method according to claim 3 or 4, wherein the refractive index of the first layer of non-metallic material (2) and that of the second layer (4,5) are different.

6. A method according to any of the preceding claims, wherein the thickness of the first layer of non-metallic material (2) is within the range 1-50 µm, such as within the range 2-25 µm, such as within the range 2-20 µm, such as within the range 5-15 µm, such as within the range 5-10 µm.

7. A method according to any of the preceding claims, wherein replication of the at least one surface relief (3) is performed as a part of a rolling process.

8. A method according to any of claims 1-6, wherein replication of the at least one surface relief (3) is performed in a stamping process.

9. An article forming an integrated part of a container and comprising
- a holding metal substrate (1),
- a first layer of non-metallic material (2) being held by the substrate (1), said first layer of non-metallic material having at least one surface relief (3) formed in the surface of said first layer, said surface relief comprising a diffracting optical element (3) and being performed as a part of a rolling process or in a stamping process
**characterised in that**:
- a colour layer (7) is provided on the surface of the metal substrate (1) for enhancing the visual effects and **in that** the non-metallic layer (2) is provided on the surface of said colour layer (7)

10. An article according to claim 9, wherein the first layer of non-metallic material (2) is selected from the group consisting of lacquers, polymers, printing inks or any combination thereof.

11. An article according to claims 9 or 10, further comprising a second layer (4,5), said second layer being substantially transparent and covering at least part of the first layer of non-metallic material.

12. An article according to claim 11, wherein the second layer (4,5) is selected from the group consisting of lacquers, polymers, laminated plastic, printing inks or any combination thereof.

13. An article according to claim 11 or 12, wherein the refractive index of the first layer of non-metallic material (2) and that of the second layer (4,5) are different.

## Patentansprüche

1. Verfahren zum Replizieren eines Oberflächen-Reliefs (3), wobei das Verfahren die folgenden Schritte aufweist:
- Bereitstellen einer ersten Schicht aus einem nichtmetallischen Material (2), das von einem Metall-Haltesubstrat (1) gehalten wird,
- Drücken eines Objekts (8) mit einer Oberfläche, die mindestens ein Oberflächen-Relief (3) aufweist, in die erste Schicht aus nichtmetallischem Material (2), um die Oberflächeneigenschaften der ersten Schicht aus nichtmetallischem Material (2) zu ändern, um das mindestens eine Oberflächen-Relief (3) zu replizieren, wobei das mindestens eine Oberflächen-Relief (3) einen Teil der Oberfläche des Objekts (8) bildet und ein lichtbeugendes optisches Element (3) aufweist, und
**dadurch gekennzeichnet, daß**
- das Metallsubstrat derart angeordnet ist, daß es einen integralen Teil eines Behälters bildet und daß eine Farbschicht (7) zwischen dem Metallsubstrat (1) und der ersten Schicht aus nichtmetallischem Material (2) vorgesehen ist, um die visuellen Effekte zu verstärken.

2. Verfahren nach Anspruch 1, wobei die erste Schicht aus nichtmetallischem Material (2) aus der Gruppe ausgewählt wird, die aus Lacken, Polymeren, Druckfarben oder jeder Kombination daraus besteht.

3. Verfahren nach Anspruch 1 oder 2, das ferner den Schritt Bereitstellen einer zweiten Schicht (4, 5) aufweist, wobei die zweite Schicht (4, 5) im wesentlichen transparent ist und mindestens einen Teil der ersten Schicht aus nichtmetallischem Material (2) bedeckt.

4. Verfahren nach Anspruch 3, wobei die zweite Schicht (4, 5) aus der Gruppe ausgewählt wird, die aus Lacken, Polymeren, beschichtetem Kunststoff, Druckfarben oder jeder Kombination daraus besteht.

5. Verfahren nach Anspruch 3 oder 4, wobei der Brechungsindex der ersten Schicht aus nichtmetallischem Material (2) und der der zweiten Schicht (4, 5) verschieden sind.

6. Verfahren nach einem der vorhergehenden Ansprüche, wobei die Dicke der ersten Schicht aus nichtmetallischem Material (2) innerhalb des Bereichs von 1 - 50 µm, wie etwa im Bereich von 2 - 25 µm, wie etwa im Bereich von 2 - 20 µm, wie etwa im Bereich von 5 - 15 µm, wie etwa im Bereich von 5 - 10 µm ist.

7. Verfahren nach einem der vorhergehenden Ansprüche, wobei die Replikation des mindestens einen Oberflächen-Reliefs (3) als ein Teil eines Walzverfahrens ausgeführt wird.

8. Verfahren nach einem der Ansprüche 1 - 6, wobei die Replikation des mindestens einen Oberflächen-Reliefs (3) in einem Prägeverfahren ausgeführt wird.

9. Artikel, der einen integralen Teil eines Behälters bildet und aufweist:
- ein Metall-Haltesubstrat (1),
- eine erste Schicht aus nichtmetallischem Material (2), die von dem Substrat (1) gehalten wird, wobei die erste Schicht aus nichtmetallischem Material mindestens ein in der Oberfläche der ersten Schicht ausgebildetes Oberflächen-Relief (3) hat, wobei das Oberflächen-Relief ein lichtbeugendes optisches Element (3) aufweist und als ein Teil eines Walzverfahrens oder in einem Prägeverfahren bereitgestellt wird,
**dadurch gekennzeichnet, daß**
- eine Farbschicht (7) auf der Oberfläche des Metallsubstrats (1) vorgesehen ist, um die visuellen Effekte zu verstärken, und daß die nichtmetallische Schicht (2) auf der Oberfläche der Farbschicht (7) vorgesehen ist.

10. Artikel nach Anspruch 9, wobei die erste Schicht aus nichtmetallischem Material (2) aus der Gruppe ausgewählt wird, die aus Lacken, Polymeren, Druckfarben oder jeder Kombination daraus besteht.

11. Artikel nach Anspruch 9 oder 10, der ferner eine zweite Schicht (4, 5) aufweist, wobei die zweite Schicht im wesentlichen transparent ist und mindestens einen Teil der ersten Schicht aus nichtmetallischem Material bedeckt.

12. Artikel nach Anspruch 11, wobei die zweite Schicht (4, 5) aus der Gruppe ausgewählt wird, die aus Lacken, Polymeren, beschichtetem Kunststoff, Druckfarben oder jeder Kombination daraus besteht.

13. Artikel nach Anspruch 11 oder 12, wobei der Brechungsindex der ersten Schicht aus nichtmetallischem Material (2) und der der zweiten Schicht (4, 5) verschieden sind.

## Revendications

1. Procédé permettant de reproduire un relief de surface (3), ledit procédé comprenant les étapes consistant à :
prévoir une première couche d'un matériau non métallique (2) qui est maintenue par un substrat métallique de support (1),
comprimer dans la première couche de matériau non métallique un objet (8) ayant une surface qui comprend au moins un relief de surface (3) afin de modifier les propriétés de surface de la première couche de matériau non métallique (2) afin de reproduire le au moins un relief de surface (3), ledit au moins un relief de surface (3) faisant partie de la surface de l'objet (8) et comprenant un élément optique diffractant (3), et
**caractérisé en ce que**
le substrat métallique est agencé pour former une partie intégrée d'un récipient et **en ce qu'**une couche de couleur (7) est prévue entre le substrat métallique (1) et la première couche de matériau non métallique (2) pour améliorer les effets visuels.

2. Procédé selon la revendication 1, dans lequel la première couche de matériau non métallique (2) est choisie dans le groupe comprenant les laques, les polymères, les encres d'impression ou l'une quelconque de leurs combinaisons.

3. Procédé selon la revendication 1 ou 2, comprenant en outre l'étape consistant à prévoir une seconde couche (4, 5), ladite seconde couche (4, 5) étant sensiblement transparente et recouvrant au moins une partie de la première couche de matériau non métallique (2).

4. Procédé selon la revendication 3, dans lequel la seconde couche (4, 5) est choisie dans le groupe comprenant les laques, les polymères, le plastique stratifié, les encres d'impression ou l'une quelconque de leurs combinaisons.

5. Procédé selon la revendication 3 ou 4, dans lequel l'indice de réfraction de la première couche de matériau non métallique (2) et celui de la seconde couche (4, 5) sont différents.

6. Procédé selon l'une quelconque des revendications précédentes, dans lequel l'épaisseur de la première couche de matériau non métallique (2) est dans la plage de l'ordre de 1 à 50 µm, telle que dans la plage de l'ordre de 2 à 25 µm, telle que dans la plage de l'ordre de 2 à 20 µm, telle que dans la plage de l'ordre de 5 à 15 µm, telle que dans la plage de l'ordre de 5 à 10 µm.

7. Procédé selon l'une quelconque des revendications précédentes, dans lequel la reproduction du au moins un relief de surface (3) est réalisée comme faisant partie d'un laminage.

8. Procédé selon l'une quelconque des revendications 1 à 6, dans lequel la reproduction du au moins un relief de surface (3) est réalisée dans un processus d'estampage.

9. Article formant partie intégrante d'un récipient et comprenant :
un substrat métallique de support (1),
une première couche de matériau non métallique (2) qui est maintenue par le substrat (1), ladite première couche de matériau non métallique ayant au moins un relief de surface (3) formé dans la surface de ladite première couche, ledit relief de surface comprenant un élément optique diffractant (3), et étant réalisé comme une partie d'un laminage ou au cours d'un processus d'estampage,
**caractérisé en ce que** :
une couche de couleur (7) est prévue sur la surface du substrat métallique (1) pour améliorer les effets visuels et **en ce que** la couche non métallique (2) est prévue sur la surface de ladite couche de couleur (7).

10. Article selon la revendication 9, dans lequel la première couche de matériau non métallique (2) est choisie dans le groupe comprenant les laques, les polymères, les encres d'impression ou l'une quelconque de leurs combinaisons.

11. Article selon les revendications 9 ou 10, comprenant en outre une seconde couche (4, 5), ladite seconde couche étant sensiblement transparente et recouvrant au moins une partie de la première couche de matériau non métallique.

12. Article selon la revendication 11, dans lequel la seconde couche (4, 5) est choisie dans le groupe comprenant les laques, les polymères, le plastique stratifié, les encres d'impression ou l'une quelconque de leurs combinaisons.

13. Article selon la revendication 11 ou 12, dans lequel l'indice de réfraction de la première couche de matériau non métallique (2) et celui de la seconde couche (4, 5) sont différents.
